Europäisches Patentamt

European Patent Office

Office européen des brevets

(11) Veröffentlichungsnummer: **0 043 405
B1**

(12) **EUROPÄISCHE PATENTSCHRIFT**

(45) Veröffentlichungstag der Patentschrift:
31.07.85

(21) Anmeldenummer: **81102554.3**

(22) Anmeldetag: **04.04.81**

(51) Int. Cl.⁴: **B 27 C 1/10,** B 23 Q 17/22

(54) Handwerkzeugmaschine mit einer Einstellvorrichtung für das Werkzeug.

(30) Priorität: **08.07.80 DE 3025797**

(43) Veröffentlichungstag der Anmeldung:
**13.01.82 Patentblatt 82/2**

(45) Bekanntmachung des Hinweises auf die Patenterteilung:
**31.07.85 Patentblatt 85/31**

(84) Benannte Vertragsstaaten:
**DE FR GB IT**

(56) Entgegenhaltungen:
**CH - A - 199 714
CH - A - 263 087
CH - A - 290 380
CH - A - 297 502
FR - A - 563 376**

(73) Patentinhaber: **ROBERT BOSCH GMBH, Postfach 50,
D-7000 Stuttgart 1 (DE)**

(72) Erfinder: **Berger, Günther, Hirschstrasse 1,
D-7441 Wolfschlugen (DE)**

BUNDESDRUCKEREI BERLIN

## Beschreibung

Die Erfindung geht aus von einer Handwerkzeugmaschine mit einer Einstellvorrichtung für das Werkzeug, insbesondere von einem motorbetriebenen Handhobel mit einer Einstellvorrichtung für die Hobeltiefe, die eine drehbare Einstellhandhabe mit einem über 360° liegenden Einstell-Drehbereich umfaßt.

Eine beispielsweise durch die CH-A-199 714 an sich bekannte, erste Gruppe von Skalenanordnungen zur Einregulierung längsverstellbarer Gegenstände hat eine in einer Ebene spiralförmig verlaufende Skala und einen die Einstellung auf der Skala angebenden Zeiger. Dabei ist die Skala längs eines Spiralschlitzes in einer zugleich die Einstellhandhabe bildenden Scheibe angeordnet und der Zeiger in diesem Spiralschlitz und durch eine radial zur Einstellhandhabe verlaufende Gleitbahn geführt.

Durch die Spiralform der Skala, die über ihre gesamte Länge stets sichtbar ist, ist das Ablesen des eingestellten Wertes sehr erschwert. Der Bedienende muß sehr genau und konzentriert hinsehen, wenn er Ablesefehler vermeiden will, die beispielsweise auch dadurch entstehen können, daß er den falschen der dem Zeiger benachbarten Skalenbereiche beiderseits des Spiralschlitzes abliest.

Eine zweite Gruppe solcher Skalenanordnungen, die beispielsweise durch die CH-A-297 502 und die FR-A-563 373 an sich bekannt sind, hat eine gerade, dem zu verstellenden Gegenstand direkt zugeordnete Skala. Besonders bei motorisch betriebenen Handhobeln liegen diese Skalen konstruktionsbedingt irgendwo an einer Seitenfläche des Maschinengehäuses und nicht an der im Blickfeld des Benutzers liegenden oberen Gehäusefläche. Auch sie erfordern zum Ablesen erhöhte Aufmerksamkeit, weil stets sämtliche Skalenwerte sichtbar sind. Zudem ist bei allen diesen Skalen die Skalenteilung sehr eng, weil für die Anzeige nur der oft sehr geringe Verstellbereich des Werkzeugs zur Verfügung steht. Das erschwert ein genaues Ablesen zusätzlich.

Die erfindungsgemäße Handwerkzeugmaschine mit den Merkmalen des Anspruchs 1 verbessert die erste Gruppe an sich bekannter Skalenanordnungen. Sie ermöglicht mittels einer spiralförmig angeordneten Skala beim Einstellen des Werkzeugs, zum Beispiel der Hobeltiefe, die Stellung der drehbaren Einstellhandhabe über mehrere Umdrehungen dieser Einstellhandhabe leicht, sicher und irrtumsfrei ablesen zu können. Durch das Verbinden des Kurvenabtasters mit einem in der angegebenen Weise geführten Schieber und das in diesem Schieber vorhandene Fenster, ist in jeder Einstellage der Einstellhandhabe der richtige Skalenwert sichtbar gemacht. Alle anderen Skalenwerte sind abgedeckt.

Die erfindungsgemäße Maschine mit den Merkmalen des Anspruchs 2 verbessert die zweite Gruppe an sich bekannter Skalenanordnungen. Sie ermöglicht mittels einer geraden Skala und einer schraubenförmigen Kurvenbahn, beim Einstellen des Werkzeugs, zum Beispiel der Hobeltiefe, die Stellung der drehbaren Einstellhandhabe über mehrere Umdrehungen dieser Einstellhandhabe leicht, sicher und irrtumsfrei ablesen zu können. Durch das Verbinden des Kurvenbahnabtasters mit einem in der angegebenen Weise geführten Schieber und das Verbinden dieses Schiebers mit einem flexiblen Skalenband, das unter einem Fenster in der Gehäusewand der Maschine vorbeibewegbar geführt ist, ist in jeder Einstellage der Einstellhandhabe der richtige Skalenwert sichtbar gemacht. Alle anderen Skalenwerte sind abgedeckt.

Durch die in den Unteransprüchen aufgeführten Maßnahmen sind vorteilhafte Weiterbildungen und Verbesserungen der in den Ansprüchen 1 und 2 angegebenen Handwerkzeugmaschine möglich. Besonders einfach, leicht bedienbar und sicher ist eine als Einstellscheibe ausgebildete, drehbare Einstellhandhabe, die innerhalb des Maschinengehäuses gelagert ist und durch eine Gehäuseöffnung mit einem Teil ihres Randes nach außen tritt. Diese Einstellscheibe bildet sowohl eine spiralförmige Kurvenbahn zum Steuern der Anzeige und Begrenzen des Einstellbereichs als auch eine entsprechende spiralförmige Einstellskala und faßt so mehrere Funktionen in einem einzigen Bauteil zusammen.

Zwei Ausführungsbeispiele des Erfindungsgegenstandes sind in der Zeichnung dargestellt und in der nachfolgenden Beschreibung näher erläutert. Es zeigt

Fig. 1 ein erstes Ausführungsbeispiel in einer Teilansicht eines motorisch betriebenen Handhobels, teilweise geschnitten,

Fig. 2 ein zweites Ausführungsbeispiel der Erfindung in einem weiteren Teilschnitt durch einen motorisch betriebenen Handhobel, und

Fig. 3 eine perspektivische Darstellung eines Handhobels nach Fig. 2.

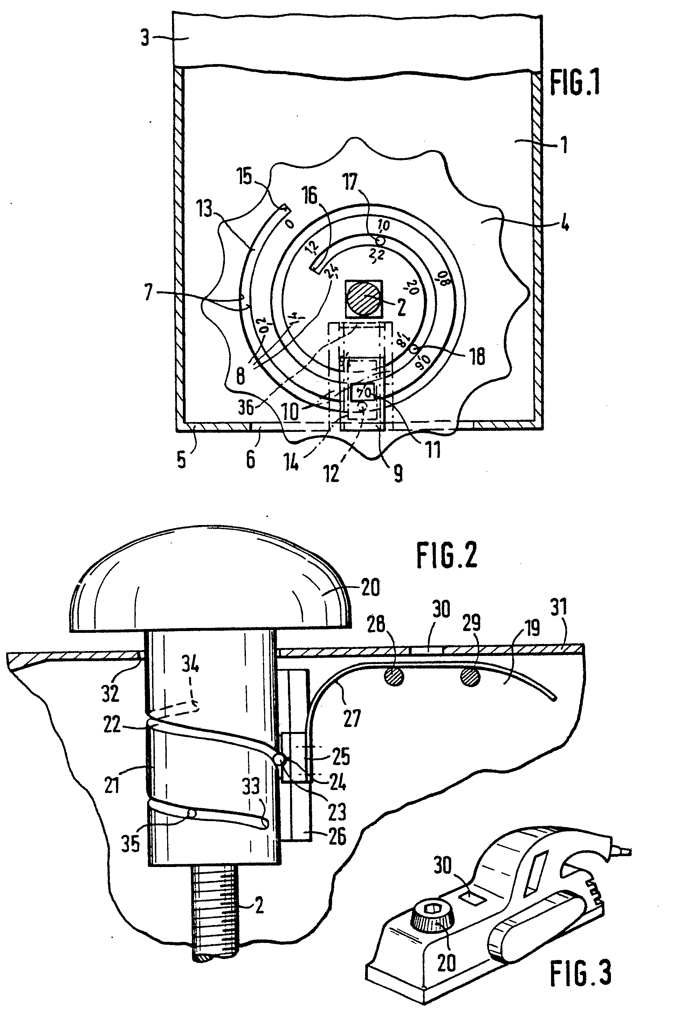

Im Ausführungsbeispiel nach Fig. 1 ist in einem Gehäuse 1 eines Handhobels eine Stellspindel 2 gelagert. Unmittelbar unter einer Gehäusewand 3 trägt die Stellspindel 2 eine fest mit ihr verbundene Einstellscheibe 4. Der Durchmesser dieser Einstellscheibe 4 und der Abstand der Stellspindel 2 von einer Gehäusewand 5 sind so gewählt, daß der Rand der Einstellscheibe 4 durch eine Öffnung 6 in dieser Gehäusewand 5 teilweise nach außen ragt. In die der Gehäusewand 3 zugewendete Oberfläche der Einstellscheibe 4 ist eine spiralförmige Kurvenbahn 7 eingearbeitet. Dieser spiralförmigen Kurvenbahn 7 ist eine ebenso spiralförmig angeordnete Einstellskala 8 zugeordnet.

Zwischen die Einstellscheibe 4 und die diese überdeckende Gehäusewand 3 ist ein Schieber 9 eingebracht, der in einer nur strichpunktiert angedeuteten Führung 10 radial zur Stellspindel 2 hin und zurück beweglich geführt ist. Diese Führung 10 ist an der Innenfläche der Gehäusewand 3 befestigt. Der Schieber 9 bildet ein Fenster 11, durch das ein Teil der Einstellskala 8 sichtbar wird. Unmittelbar neben diesem Fenster 11 trägt der Schieber 9 einen Zapfen 12. Der Zapfen 12 greift ein in einen Führungsschlitz 13, dessen beide Ränder jeweils eine spiralförmige Kurvenbahn 7 bilden und dient als Kurvenbahnabtaster. Ein Sichtfenster 14 in der Gehäusewand 3 übergreift den gesamten Einstellbereich des Fensters 11 in dem Schieber 9. Die Enden 15 und 16 des Führungsschlitzes 13 bieten dem Zapfen 12 einen Anschlag, wodurch der Einstellbereich der Einstellscheibe 4 klar begrenzt ist. In den Grund des Führungsschlitzes 13 in der Einstellscheibe 4 sind Aufnahmeöffnungen 17 und 18 für Anschläge vorgesehen, die, in eine dieser Aufnahmeöffnungen eingebracht, den Weg des Zapfens 12 verkürzen, um die Einstellvorrichtung durch Verändern der maximalen Spantiefe an Motoren mit verschiedener Leistung anzupassen. Der Weg des Kurvenbahnabtasters 9, 12 kann auch durch einen gehäusefesten Anschlag 36 begrenzt sein.

Zum Einstellen der Hobeltiefe wird die Einstellscheibe 4 an ihrem herausragenden Rand verstellt. Die hiermit bewegte Stellspindel 2 verstellt in bekannter Weise die Auflagefläche des Hobels gegenüber dessen Messerwalze. Beim Drehen der Einstellscheibe 4 nimmt eine der Kurvenbahnen 7 über den Zapfen 12 den Schieber 9 mit. Auf diese Weise wird der Schieber 9 stets so eingestellt, daß sein Fenster 11 einen Zahlenwert der Einstellskala 8 sichtbar werden läßt. Die übrigen Bereiche innerhalb des Sichtfensters 14 sind vom Schieber 9 abgedeckt. Das äußere Ende 15 des Führungsschlitzes 13 begrenzt die Bewegbarkeit der Einstellscheibe 4 bei der Einstellung auf die Spantiefe Null. Das innere Ende 16 des Führungsschlitzes 13 begrenzt die Verstellbarkeit der Einstellscheibe 4 bei der maximalen Spantiefe für den stärksten verwendeten Motor. Für andere Ausführungsformen des motorisch betriebenen Handhobels mit weniger starken Motoren kann durch das Einsetzen eines Anschlags in eine der Aufnahmeöffnungen 17 und 18 der Einstellbereich der Einstellscheibe 4 bei einer geringeren Hobeltiefe begrenzt werden.

Im Ausführungsbeispiel nach Fig. 2 ist die Stellspindel 2 innerhalb eines Maschinengehäuses 19 gelagert. Sie trägt an ihrem stellseitigen Ende einen Drehgriff 20 mit einem zylindrischen Schaft 21. Eine schraubenförmige Kugellaufrinne 22 im Mantel des Schaftes 21 bildet eine schraubenförmige Kurvenbahn. In diese Kugellaufrinne 22 greift eine Kugel 23 ein, die in einer käfigförmigen Ausnehmung 24 eines Schiebers 25 gehalten ist. Der Schieber 25 ist mittels einer Führung 26 parallel zur Längsachse des Schaftes 21 geführt und mit einem flexiblen Skalenband 27 verbunden. Das Skalenband 27 ist über Bolzen 28 und 29 unterhalb eines Fensters 30 vorbeigeführt, das in einer Gehäusewand 31 vorgesehen ist. Die gleiche Gehäusewand 31 besitzt auch eine Ausnehmung 32, durch die der Schaft 21 in das Maschinengehäuse 19 eingreift. Die Kugellaufrinne 22 bietet mit ihren Enden 33 und 34 Einstellbereichsgrenzen für den Drehgriff 20. In den Grund der Kugellaufrinne 22 eingebrachte Aufnahmeöffnungen für einen Anschlag 35 gestatten auch hier die Einschränkung des Einstellbereichs für weniger starke Antriebsmotoren.

Beim Drehen des Drehgriffs 20 wird die Stellspindel 2 und mit ihr das Werkzeug verstellt. Die Kugellaufrinne 22 treibt über die Kugel 23 den Schieber 25 längs seiner Führung 26. Auf diese Weise wird das flexible Skalenband 27 mit seiner fensterseitig aufgebrachten Skala unter dem Fenster 30 hin- und herbewegt. Jede Einstellung des Drehgriffs 20 und damit des Werkzeugs kann eindeutig abgelesen werden. Die mit Normalgewinde versehene Stellspindel 2 gewährleistet, daß sich der Drehgriff 20 leicht drehen läßt und dennoch vom Werkzeug her einwirkende Erschütterungen die Einstellung nicht unbeabsichtigt verändern können. Die Einstellvorrichtung ist auch hier trotz ihrer erreichten Vorzüge einfach und kostengünstig aufgebaut. Die als Kurvenbahnabtaster dienende Kugel 23 sorgt für eine noch leichtere Beweglichkeit der Einstellmittel und ist dennoch betriebssicher. Mit ihr lassen sich, beispielsweise durch eine örtlich geringfügig vertiefte Kugellaufrinne 22 und eine begrenzte federnde Lagerung der Kugel 23 auf einfache Weise Rasten für bevorzugte Einstellungen des Drehgriffs 20 verwirklichen.

**Patentansprüche**

1. Handwerkzeugmaschine mit einer Einstellvorrichtung (2, 4) für das Werkzeug, insbesondere motorisch betriebener Handhobel mit einer Einstellvorrichtung für die Hobeltiefe, die eine drehbare Einstellhandhabe (4) umfaßt, die über eine Stellspindel (2) mit dem Werkzeug verbunden ist und zugleich eine spiralförmig ihre Drehachse umschließende, mit einer Skala (8) versehene Kurvenbahn (7) hat, die von einem in radialer Richtung geführten Anzeigemittel (9) abgetastet wird, dessen Stellung zur Skala (8) die Einstellung des Werkzeugs anzeigt, wobei die drehbare Einstellhandhabe (4) eine innerhalb eines Maschinengehäuses (1) gelagerte und durch eine Öffnung (6) in einer Gehäusewand 5 mit einem Teil ihres Randes nach außen tretende Einstellscheibe (4) ist, die eine spiralförmige Kurvenbahn (7) und eine ebenso spiralförmig angeordnete Einstellskala (8) besitzt, der Kurvenbahnabtaster (12) durch einen Schieber (9) getragen wird, der radial zur Einstellscheibe (4) geführt ist und ein Fenster (11) zur Einstellskala (8) besitzt, und der Schieber (9) zwischen der Einstellscheibe (4) und einer diese abdeckenden Gehäusewand (3) angeordnet ist, die ein radial über alle Skalenwindungen reichendes Sichtfenster (14) hat, so daß durch das Fenster (11) im Schieber (9) jeweils nur ein Wert auf einer der Skalenwindungen sichtbar ist und die vom Sichtfenster (14) übergriffenen anderen Teile der Skalenwindungen vom Schieber (9) abgedeckt sind.

2. Handwerkzeugmaschine mit einer Einstellvorrichtung (2, 20) für das Werkzeug, insbesondere motorisch betriebener Handhobel mit einer Einstellvorrichtung für die Hobeltiefe, die eine drehbare Einstellhandhabe (20) umfaßt, die über eine Stellspindel (2) mit dem Werkzeug und zugleich mit einem Kurvenkörper (21) verbunden ist, dessen Kurvenbahn (22) ihre Drehachse über einen Winkel von mehr als 360° schraubenförmig umschlingt und von einem in Richtung ihrer Drehachse geführten Anzeigemittel (25) abgetastet wird, dessen Stellung zusammen mit einer Einstellskala (27) die Einstellung des Werkzeugs anzeigt, wobei die drehbare Einstellhandhabe ein Drehgriff (20) mit einem zylindrischen Schaft (21) ist, der am Schaft (21) eine schraubenförmige Kurvenbahn (22) bildet, der Kurvenbahnabtaster (23) durch einen Schieber (25) getragen wird, der parallel zur Längsachse des Schaftes (21) geführt und mit einem flexiblen Skalenband (27) verbunden ist, und das flexible Skalenband (27) unter einem Fenster (30) in einer Gehäusewand (31) vorbei bewegbar geführt ist.

3. Handwerkzeugmaschine nach Anspruch 1, dadurch gekennzeichnet, daß die drehbare Einstellhandhabe ein Drehgriff (20) mit einem zylindrischen Schaft (21) ist, der am Schaft (21) eine schraubenförmige Kurvenbahn (22) bildet, daß der Kurvenbahnabtaster (23) durch einen Schieber (25) getragen wird, der parallel zur Längsachse des Schaftes (21) geführt und mit einem flexiblen Skalenband (27) verbunden ist, und daß das flexible Skalenband (27) unter einem Fenster (30) in einer Gehäusewand (31) vorbei bewegbar geführt ist.

4. Handwerkzeugmaschine nach einem der Ansprüche 1 bis 3, dadurch gekennzeichnet, daß die Kurvenbahn (7; 22) durch eine Führungsrinne (13; 22) gebildet und der Kurvenbahnabtaster ein in einen Führungsschlitz (13) eingreifender Zapfen (12) bzw. eine in eine Kugellaufrinne (22) eingreifende Kugel (23) ist.

5. Handwerkzeugmaschine nach einem der Ansprüche 1 bis 4, dadurch gekennzeichnet, daß das eine Ende (16; 34) der die Kurvenbahn bildenden Führungsrinne (13; 22) eine Anschlagfläche bildet, die zusammen mit dem Kurvenbahnabtaster (12; 23) die maximale Spantiefe entsprechend der vorhandenen Motorleistung begrenzt.

6. Handwerkzeugmaschine nach Anspruch 5, dadurch gekennzeichnet, daß in dem die Kurvenbahn (7; 22) bildenden Körper (4; 21) entlang der Kurvenbahn Aufnahmeöffnungen (17; 18) für Anschläge (35) vorgesehen sind, die, in eine dieser Aufnahmeöffnungen eingebracht, den Weg des Kurvenbahnabtasters (12; 23) verkürzen, um die Einstellvorrichtung durch Verringern der maximalen Spantiefe an einen Motor mit geringerer Leistung anzupassen.

7. Handwerkzeugmaschine nach einem der Ansprüche 1 bis 6, dadurch gekennzeichnet, daß als Kurvenbahnabtaster eine Kugel (23) verwendet ist, die in einer als Käfig dienenden Ausnehmung (24) im Schieber (25) gehalten ist.

8. Handwerkzeugmaschine nach einem der Ansprüche 4 bis 7, dadurch gekennzeichnet, daß die Kugellaufrinne (22) örtlich begrenzte Vertiefungen aufweist, und die Kugel (23) geringfügig federnd gehalten ist, und daß die örtlich begrenzten Vertiefungen bevorzugten Einstellungen des Drehgriffs (20) zugeordnet sind.

9. Handwerkzeugmaschine nach einem der Ansprüche 1 bis 8, dadurch gekennzeichnet, daß der Weg des Kurvenbahnabtasters (9, 12) durch einen Anschlag (36) im Gehäuse (1) begrenzt ist.

**Claims**

1. Hand machine tool with a setting device (2, 4) for the tool, in particular a motor-driven hand plane with a setting device for the planing depth, which comprises a rotatable setting grip (4), which is connected to the tool via a setting scew (2) and, at the same time, has a curved track (7) helically encompassing the rotary axis of the screw and provided with a scale (8), which track is traced by an indicating means (9), which is guided in the radial direction and the position of which relative to the scale (8) indicates the setting of the tool, the rotatable setting grip (4) being a setting disc (4), which possesses a helical curved track (7) and a likewise helically arranged setting scale (8) and is mounted within a machine casing (1) and protrudes outwards with a part of its edge through an opening (6) in one casing wall (5), the curved track tracer (12) being borne by a slide (9), which is guided radially to the setting disc (4) and possesses a window (11) to the setting scale (8), and the slide (9) being arranged between the setting disc (4) and a casing wall (3) which masks the latter and has a viewing window (14) which extends radially over all scale windings so that only one value on one of the scale windings is ever visible through the window (11) in the slide (9) and the other parts of the scale windings covered by the viewing window (14) are masked by the slide (9).

2. Hand machine tool with a setting device (2, 20) for the tool, in particular a motor-driven hand plane with a setting device for the planing depth, which comprises a rotatable setting grip (20), which is connected to the tool via a setting screw (2) and, at the same time, is connected to a curved body (21), the curved track (22) of which helically encompasses the rotary axis of the screw over an angle of more than 360° and is traced by an indicating means (25) which is guided in the direction of the rotary axis of the screw and the position of which, together with a setting scale (27) indicates the setting of the tool, the rotatable setting grip being a knob (20) with a cylindrical shank (21), which forms on the shank (21) a helical curved track (22), the curved track tracer (23) being borne by a slide (25), which is guided parallel to the longitudinal axis of the shank (21) and is connected to a flexible scale strip (27), and the flexible scale strip (27) being guided movably past under a window (30) in one casing wall (31).

3. Hand machine tool according to claim 1, characterised in that the rotatable setting grip is a knob (20) with a cylindrical shank (21), which forms on the shank (21) a helical curved track (22), in that the curved track tracer (23) is borne by a slide (25), which is guided parallel to the longitudinal axis of the shank (21) and is connected to a flexible scale strip (27), and in that the flexible scale strip (27) is guided movably past under a window (30) in one casing wall (31).

4. Hand machine tool according to one of claims 1 to 3, characterised in that the curved track (7; 22) is formed by a guide groove (13; 22) and the curved track tracer is a pin (12) engaging in a guide slit (13) or else is a ball (23) engaging in a ball groove (22).

5. Hand machine tool according to one of claims 1 to 4, characterised in that one of the ends (16; 34) of the guide groove (13; 22) forming the curved track forms a stop surface which, together with the curved track tracer (12; 23) limits the maximum cutting depth according to the available motor power.

6. Hand machine tool according to claim 5, characterised in that recesses (17; 18) for stops (35) are provided along the curved track in the body (4; 21) forming the curved track (7; 22), which stops inserted, into one of these recesses, shorten the path of the curved track tracer (12; 23) in order to adapt the setting device to a motor of lower power by reducing the maximum cutting depth.

7. Hand machine tool according to one of claims 1 to 6, characterised in that a ball (23) is used as curved track tracer, which ball is held in a recess (24), acting as a cage in the slide (25a).

8. Hand machine tool according to one of claims 4 to 7, characterised in that the ball groove (22) has locally confined deppressions and the ball (23) is held slightly sprung, and in that the locally confined depressions are assigned to preferred settings of the knob (20).

9. Hand machine tool according to one of claims 1 to 8, characterised in that the path of the curved track tracer (9, 12) is limited by a stop (36) in the casing (1).

**Revendications**

1. Machine-outil à main avec un dispositif de réglage (2, 4) pour l'outil, en particulier rabot à main motorisé avec un dispositif de réglage pour la profondeur de rabotage, comportant un mécanisme de réglage par rotation (4) relié à l'outil par l'intermédiaire d'une broche de positionnement (2) et présentant en même temps une glissière (7) qui est munie d'une échelle de lecture (8) entourant en spirale son axe de rotation et que palpe un moyen d'indication (9), guidé en position radiale et dont la position par rapport à l'échelle (8) indique le réglage de l'outil, étant précisé que le mécanisme de réglage par rotation (4) est une poignée de réglage (4) qui tourillonne à l'intérieur d'un boîtier de machine (1), sort à l'extérieur, par une partie de sa bordure, par une ouverture (6) dans une paroi du boîtier (5) et possède une glissière (7) en spirale et une échelle de réglage (8) également disposée en spirale; étant aussi précisé que le palpeur de glissière (12) est porté par un coulisseau (9) qui est guidé radialement par rappot à la poignée de réglage (4) et qui possède une fenêtre (11) correspondant à l'échelle de réglage (8); et étant aussi précisé que le coulisseau (9) est disposé entre la poignée de réglage (4) et une paroi de boîtier (3) qui recouvre cette poignée et présente un regard (14) qui s'étend radialement sur toutes les spires de l'échelle, de sorte qu'à travers la fenêtre (11) du coulisseau (9) une seule valeur est chaque fois visible sur l'une des spires de l'échelle et que les autres parties, recouvertes par le regard (14), des spires de l'échelle sont cachées par le coulisseau (9).

2. Machine-outil à main avec un dispositif de réglage (2, 20) pour l'outil, en particulier rabot à main motorisé avec un dispositif de réglage pour la profondeur de rabotage, comportant un mécanisme de réglage par rotation (20) relié à l'outil par l'intermédiaire d'une broche de positionnement (2) et relié en même temps à un corps de glissière (21) dont la glissière (22) s'enroule en spirale autour de l'axe de rotation de la broche sur un angle de plus de 360° et est palpée par un moyen d'indication (25) guidé dans la direction de l'axe de rotation de la broche et dont la position, en collaboration avec une échelle de réglage (27) indique la position de l'outil, étant précisé que le mécanisme de réglage par rotation est une poignée tournante (20) à fût cylindrique (21) qui porte sur le fût (21) une glissière hélicoïdale (22); étant aussi précisé que le palpeur de glissière (23) est porté par un coulisseau (25) guidé parallèlement à l'axe longitudinal du fût (21) et relié à une bande graduée flexible (27); et étant aussi précisé que la bande graduée flexible (27) est guidée de façon à passer sous une fenêtre (30) de la paroi du boîtier (31).

3. Machine-outil à main selon la revendication 1, caractérisée en ce que le mécanisme de réglage par rotation est une poignée tournante (20) à fût cylindrique (21) qui porte sur le fût (21) une glissière hélicoïdale (22); que le palpeur de glissière (23) est porté par un coulisseau (25) guidé parallèlement à l'axe longitudinal du fût (21) et relié à une bande graduée flexible (27); et que la bande graduée flexible (27) est guidée de façon à passer sous une fenêtre (30) de la paroi du boîtier (31).

4. Machine-outil à main selon l'une des revendications 1 à 3 , caractérisée en ce que la glissière (7; 22) est constituée par une gorge de guidage (13; 22) et en ce que le palpeur de glissière est un tenon (12) qui vient en prise dans une rainure de guidage (13) ou une bille (23) qui vient en prise dans une gorge à bille (22).

5. Machine-outil à main selon l'une des revendications 1 à 4, caractérisée en ce que l'une des extrémités (16; 34) de la goulotte de guidage (13;

22) qui constitue la glissière forme une surface de butée qui, en collaboration avec le palpeur de glissière (12; 23), limite l'épaisseur de copeau maximale correspondant à la puissance effective du moteur.

6. Machine-outil à main selon la revendication 5, caractérisée en ce que dans le corps (4; 21) qui présente la glissière (7; 22), le long de la glissière, sont prévues des ouvertures (17; 18) de réception de butée (35) qui, rapportées dans l'une de ces ouvertures, raccourissent la course du palpeur de glissière (12; 23) pour adapter le dispositif de réglage à un moteur de moindre puissance en réduisant l'épaisseur de copeau maximale.

7. Machine-outil à main selon l'une des revendications 1 à 6, caractérisée en ce que l'on utilise comme palpeur de glissière une bille (23) maintenue dans un évidement (24) du coulisseau (25) qui sert de cage.

8. Machine-outil à main selon l'une des revendications 4 à 7, caractérisée en ce que la gorge à bille (22) présente localement des creux limités, en ce que la bille (23) est maintenue avec une légère élasticité et en ce que des creux limités locaux correspondent à des réglages préférés de la poignée (20).

9. Machine-outil à main selon l'une des revendications 1 à 8, caractérisée en ce que la course du palpeur de glissière (9, 12) est limitée par une buté (36) dans le boitier (1).

FIG.1

FIG.2

FIG.3